# EUROPEAN PATENT APPLICATION

(11) **EP 4 640 495 A1**
(43) Date of publication of application: **29.10.2025**
(21) Application number: 24171654.7
(22) Date of filing: 22.04.2024
(51) Int. Cl.: B60R 21/045

(54) **VEHICLE EQUIPPED WITH A KNEE BOLSTER**

(71) Applicant: Volvo Truck Corporation, 405 08 Göteborg (SE)
(72) Inventor: Ketham Reddy, Vineeth, 500089 HYDERABAD (IN)
(74) Representative: Lavoix

(57) **Abstract**

A vehicle (10) comprises an instrument panel (16), defining an internal volume (V16); a structural member (18), located in the internal volume (V16) of the instrument panel (16) and on which the instrument panel is fixed; and at least one knee bolster (20), located in the internal volume (V16) of the instrument panel (16). The at least one knee bolster comprises a L-shaped fixing bracket (22), having a fixation leg (24) fixed to the structural member (18) and a support leg (26) extending from the fixation leg (24) towards the instrument panel (16), and a cushion (30), attached to the support leg (26) of the fixing bracket (22) and located between the fixing bracket and the instrument panel (16).

## Description

### TECHNICAL FIELD

The disclosure relates generally to automotive vehicles, such as trucks. In particular aspects, the disclosure relates to a vehicle equipped with a knee bolster. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is known to equip automotive vehicles with knee bolsters, located in an internal volume of the instrument panel, to absorb an impact against the instrument panel from the legs of a passenger of the vehicle during an accident and prevent an uncontrolled displacement of the legs. Indeed, the instrument panel is generally made of plastic and is therefore not resistant enough to resist an impact of the legs of the passenger during an accident. Preventing uncontrolled displacement of the legs of the passenger is necessary to prevent serious injuries.

Known knee bolsters usually comprise brackets made of a material having a higher stiffness than the instrument panel, such as metal, and are located behind the instrument panel to reinforce it. During an accident, the legs of a passenger collide with the instrument panel and the stiff brackets prevent further displacement of the legs by absorbing the momentum of the passenger's body. However, due to their stiffness, such knee bolsters can cause severe compression of the knees and/or femurs of the passenger, leading to injuries such as ligament tear. In particular, due to their higher stiffness than the instrument panel, such knee bolsters can break the instrument panel during an accident and directly enter in contact with the legs of the passenger.

There is therefore a need for a vehicle equipped with knee bolsters that are safer for the passengers of the vehicle.

### SUMMARY

According to a first aspect of the disclosure, a vehicle comprises an instrument panel, defining an internal volume; a structural member, located in the internal volume of the instrument panel and on which the instrument panel is fixed; and at least one knee bolster, located in the internal volume of the instrument panel. The at least one knee bolster comprises a L-shaped fixing bracket, having a fixation leg fixed to the structural member and a support leg extending from the fixation leg towards the instrument panel, and a cushion, attached to the support leg of the fixing bracket and located between the fixing bracket and the instrument panel. The first aspect of the disclosure may seek to improve the safety of the knee bolster by reducing the risk of injury of the legs of a passenger during an accident. A technical benefit may include controlling the displacement of the legs of the passenger, due to the L-shape of the fixing bracket, while reducing the risk of injury of the legs by avoiding direct contact between the legs and the fixing brackets with the cushion.

Optionally in some examples, including in at least one preferred example, the support leg extends from the fixation leg obliquely upwards. A technical benefit may include offering an ideal positioning of the support leg and of the cushion to protect the legs of the passenger during a frontal accident.

Optionally in some examples, including in at least one preferred example, the support leg extends from the fixation leg at an angle to a vertical axis comprised between 30° and 55°. A technical benefit may include optimizing the positioning of the support leg and of the cushion.

Optionally in some examples, including in at least one preferred example, the cushion is made of a shock absorbing foam. A technical benefit may include offering a better protection of the legs of the passenger during a frontal accident, by absorbing the kinetic energy of the legs into the cushion
Optionally in some examples, including in at least one preferred example, the cushion is made of expanded polypropylene having a density comprised between 0.015 g/cm³ and 0.055 g/cm³. A technical benefit may include optimizing the protection offered by the cushion.

Optionally in some examples, including in at least one preferred example, the vehicle further comprises a seat having a squab and a backrest and the at least one knee bolster is located, along a vertical axis of the vehicle, at least partially above the squab. A technical benefit may include offering an ideal positioning of the support leg and of the cushion to protect the legs of the passenger during a frontal accident.

Optionally in some examples, including in at least one preferred example, the instrument panel comprises a front panel facing the seat, the support leg extending from the fixation leg towards the front panel and the cushion being located between the fixing bracket and the front panel. A technical benefit may include offering an ideal positioning of the support leg and of the cushion to protect the legs of the passenger during a frontal accident.

Optionally in some examples, including in at least one preferred example, the fixing bracket is configured to deform plastically at a junction between the fixation leg and the support leg under the effect of a force applied to the support leg. A technical benefit may include absorbing the kinetic energy of the legs of the passenger during a frontal collision, thus better protecting the legs.

Optionally in some examples, including in at least one preferred example, in a plastically deformed configuration of the fixing bracket, the support leg is in abutment against the structural member. A technical benefit may include controlling the displacement of the support leg and thus of the legs of the passenger during a frontal collision.

Optionally in some examples, including in at least one preferred example, in a plastically deformed configuration of the fixing bracket, an angle between the fixation leg and the support leg is comprised between 74° and 80°. A technical benefit may include optimizing the position of the cushion after deformation of the fixing bracket.

Optionally in some examples, including in at least one preferred example, in a non-deformed configuration of the fixing bracket, an angle between the fixation leg and the support leg is comprised between 90° and 110°. A technical benefit may include optimizing the position of the cushion before deformation of the fixing bracket. Furthermore, the difference between the angles between the fixation leg and the support leg in the non-deformed configuration and the plastically deformed configuration allows for sufficient plastic deformation of the function to absorb a significant amount of kinetic energy of the legs of the passenger during a frontal accident.

Optionally in some examples, including in at least one preferred example, the fixing bracket is configured to limit a deformation of the instrument panel under the effect of a force applied to the instrument panel oriented towards the fixing bracket. A technical benefit may include reducing the risk of the front panel breaking during a frontal accident of the vehicle.

Optionally in some examples, including in at least one preferred example, the fixing bracket is made of steel. A technical benefit may include optimizing the strength and capability of energy absorption during deformation of the fixing bracket.

Optionally in some examples, including in at least one preferred example, a length of the cushion is comprised between 150 mm and 200 mm. A technical benefit may include protecting both the knee and the tibia of the legs of the passenger, regardless of the height of the passenger.

Optionally in some examples, including in at least one preferred example, the vehicle comprises two knee bolsters. A technical benefit may include protecting both legs of the passenger.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a side view of an exemplary vehicle according to an example, equipped with knee bolsters.

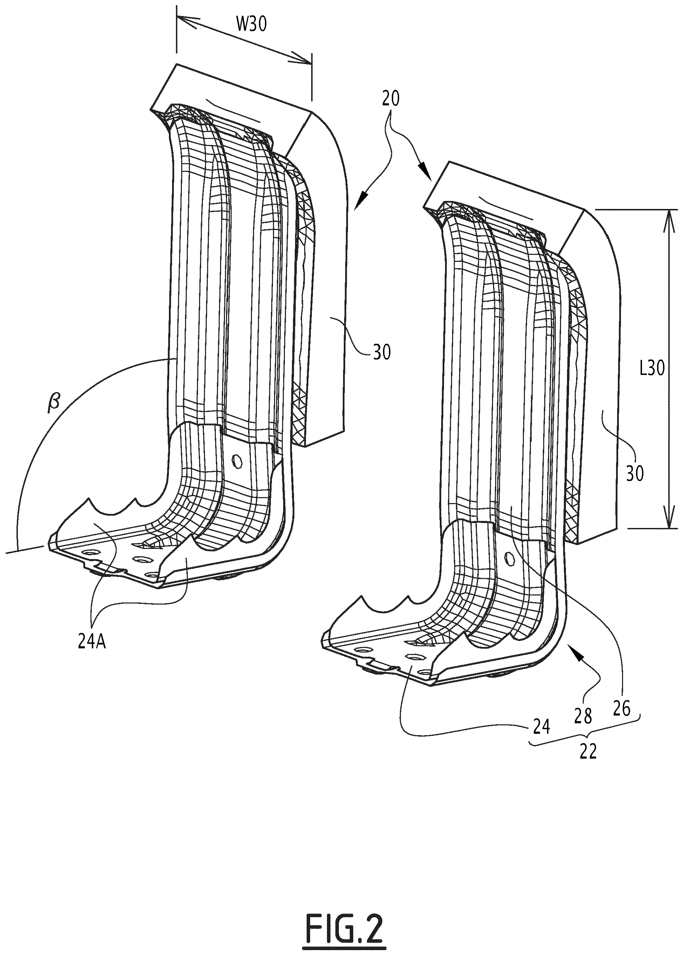

**FIG. 2** is a perspective view of two knee bolsters of the vehicle of Figure 1.
**FIG. 3** is a side view of a knee bolster of the vehicle of Figure 1, in a plastically deformed configuration.

### DETAILED DESCRIPTION

The detailed description set forth below provides information and examples of the disclosed technology with sufficient detail to enable those skilled in the art to practice the disclosure.

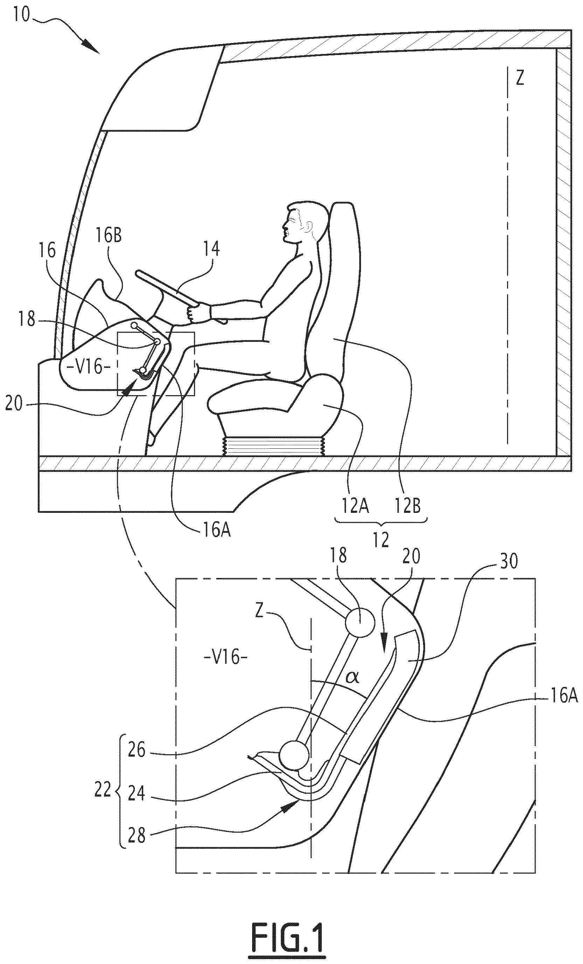

Figure 1 shows an exemplary vehicle 10. In the example, the vehicle 10 is a truck but the disclosure is not restricted to any particular vehicle. In Figure 1, only the cabin of the vehicle 10 is represented.

The vehicle 10 comprises a driver's seat 12, a passenger's seat, not shown, a steering wheel 14, an instrument panel 16 and a structural member 18. A vertical axis of the vehicle 10 is noted Z.

The driver's seat 12 comprises a squab 12A and a backrest 12B. A passenger P is represented sitting on the driver's seat 12. In the following disclosure, the term "passenger" indifferently refers to a driver of the vehicle, sitting in the driver's seat, or to a passenger of the vehicle, sitting in the passenger's seat.

The instrument panel 16 defines an internal volume V16 and comprises a front panel 16A, which is facing the driver's seat 12. More precisely, the front panel 16A is located in front of the knees of the passenger P, i.e. the front panel is facing the knees of the passenger. The front panel 16A is located at least partially above the squab 12A along the vertical axis Z. The instrument panel 16 also comprises a top panel 16B, located behind the steering wheel 14 and which displays instrumentation and controls for the operation of the vehicle 10.

The instrument panel 16 is fixed, at least partly, to the structural member 18, which is located in the internal volume V16 of the instrument panel. In the example, the structural member 18 comprises a framework of metal bars, shown in simplified form in Figure 1. The fixation of the instrument panel 16 on the structural member 18 is not shown in Figure 1.

Due to the position of the front panel 16A and of the structural member 18 relative to the driver's seat 12, in case of a frontal accident causing the passenger P to move forward from its seat, the legs of the passenger P, and in particular its knees, will collide with the front panel 16A. As the front panel 16A is generally made in a low-stiffness material, such as plastic, such collision will generally deform or break the front panel 16A, leading to the legs of the passenger P, and in particular its knees, to further collide with the structural member 18. In addition, the legs of the passenger P could also collide with a steering column connected to the steering wheel 14. Such collision of the legs of the passenger P with the structural member 18 and/or with the steering column can lead to severe injuries, such as ligament tears or fractures.

To prevent these injuries, the vehicle 10 is equipped with two knee bolsters 20, which are facing the driver's seat 12, each knee bolster 20 being in front of one of the legs of the passenger P sitting in the driver's seat 12 in a normal sitting position. The two knee bolsters 20 are configured to control the displacement of the legs of the passenger P in case of a frontal accident, after the legs collide the front panel 16A.

Each knee bolster 20 comprise a fixing bracket 22 having an L-shape, with two legs: a fixation leg 24 and a support leg 26.

Each knee bolster 20 is fixed to the structural member 18 by its fixation leg 24. In the example, the fixation leg 24 comprises two mounting flanges 24A, which are shaped to conform to the shape of the structural member 18, and the fixation leg is attached to the structural member by means of screws, not represented. As an alternative, the fixation leg 24 is welded to the structural member 18 or attached by other means to the structural member.

The support leg 26 extends from the fixation leg 24 towards the instrument panel 16. More precisely, the support leg 26 extends from the fixation leg 24 towards the front panel 16A. In addition, in the example, the support leg 26 extends from the fixation leg 24 obliquely upwards. Here, "obliquely" means that the support leg 26 extends from the fixation leg 24 at an angle α to the vertical axis Z which is comprised between 30° and 55°, preferably comprised between 40° and 45°, preferably at an angle α equal to 40°.

Hence, the support leg 26 extends essentially parallel to the front panel 16A, as visible in Figure 1, so that a force applied to the front panel 16A by the legs of the passenger P during an accident is transmitted to the support leg 26. As a result, the knee bolster 20 is located, along the vertical axis Z, at least partially above the squab 12A.

Furthermore, in a non-deformed configuration of the fixing bracket 22, an angle β between the fixation leg 24 and the support leg 26 is preferably comprised between 90° and 110°.

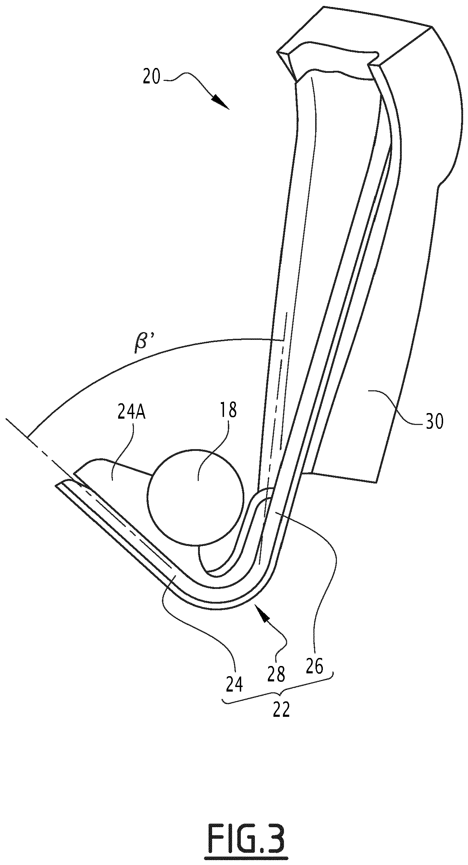

The fixation leg 24 and the support leg 26 meet at a junction 28, which is configured to deform plastically under the effect of a force applied to the support leg 26 by the legs of the passenger P, said force being transmitted by the front panel 16A. More precisely, the fixing bracket 22 is designed so that the junction 28 deform plastically before the fixation leg 24 and the support leg 26 under such force. This plastic deformation of the junction 28 is shown in Figure 3.

In addition, the fixing bracket 22 is designed so that, under such force, the deformation of the junction 28 leads to the support leg 26 being brought closer to the fixation leg 24. Hence, in a plastically deformed configuration of the fixing bracket 22, as shown in Figure 3, an angle β' between the fixation leg 24 and the support leg 26 is comprised between 74° and 80°.

Preferably, in the plastically deformed configuration of the fixing bracket 22 shown in Figure 3, the support leg 26 is in abutment against the structural member 18 so that further deformation of the fixing bracket 22 is prevented.

The amplitude on movement of the support leg 26 between the non-deformed configuration of the fixing bracket 22 and its plastically deformed configuration is particularly advantageous, as it allow for efficiently absorb the kinetic energy of the legs of the passenger P during a frontal accident, said kinetid energy being converted in the mechanical deformation of the junction 28, while preventing collision between the legs of the passenger P and the structural member 18 and/or the steering column.

The fixing bracket 22 is made of a material having a higher stiffness than the material of the instrument panel 16. Preferably, the fixing bracket 22 is made of steel.

In case of a frontal accident of the vehicle 10, after the legs of the passenger P collide with the front panel 16A, the force applied to the front panel by the legs is transmitted to the fixing bracket 22 and more particularly to the support leg 26, because the support leg 26 extends parallel to the front panel 16A close to the front panel and because the force caused by a frontal accident is oriented towards the fixing bracket 22. Hence, the mechanical stress on the front panel 16A is reduced, so that the deformation of the instrument panel 16 under said force is limited thanks to the knee bolster 20.

Furthermore, regardless of whether the front panel 16A breaks or deforms under the force exerted by the legs of the passenger P, the knee bolsters 20 allow controlling and limiting the displacement of the legs of the passenger P, by absorbing the kinetic energy of the legs in the deformation of the junction 28.

Therefore, thanks to the knee bolsters 20, a collision between the legs of the passenger P and the structural member 18 or the steering column is avoided, reducing the risk of severe injuries during a frontal accident of the vehicle 10.

Each knee bolster 20 further comprise a cushion 30, attached to the support leg 26 of the fixing bracket 22 and located between the fixing bracket and the instrument panel 16. More precisely, the cushion 30 of a knee bolster 20 is located between the support leg 26 of the knee bolster and the front panel 16A of the instrument panel.

Preferably, the cushion 30 is glued to the support leg 26. Other means for attaching the cushion 30 to the support leg 26 can be considered.

The cushion 30 is made of a material having a lower stiffness than the fixing bracket 20 and than the instrument panel 16. Preferably, the cushion 30 is made of a shock absorbing foam. For example, the cushion 30 is made of expanded polypropylene (also known by the abbreviation EPP), having preferably a density comprised between 0.015 g/cm³ and 0.055 g/cm³, for example equal to 0.035 g/cm³.

In the example, the cushion 30 is in contact with the front panel 16A of the instrument panel 16. Preferably, the cushion 30 is at least partially compressed between the support leg 2 and the front panel 16A. As an alternative, not shown, the cushion 30 is located at a distance from the front panel 16A, for example 10 to 100 mm away from the panel.

The cushion 30 is particularly advantageous to further reduce the risk of injuries of the passenger P during a frontal accident of the vehicle 10. Indeed, thanks to the cushion 30, the front panel 16A cannot directly collide with the fixing bracket 22 in case of a frontal accident of the vehicle 10: the front panel 16A instead collide with the cushion, thus reducing the risk of the front panel breaking. Similarly, the legs of the passenger P cannot directly collide with the fixing bracket 22 in case of a frontal accident and in case of rupture of the front panel 16A, because the legs will instead collide with the cushion 30. Hence, a direct contact between the legs of the passenger P and the fixing brackets 22 having a high stiffness is avoided. Instead, the legs of the passenger P will be in contact either with the front panel 16A having a low stiffness or directly with the cushion 30, depending on whether the front panel breaks or not, allowing a more even distribution of the impact and avoiding direct contact of the legs with high stiffness components.

The knee bolsters 20 are therefore particularly advantageous as they simultaneously control and limit the displacement of the legs of the passenger P during a frontal accident, thanks to the high-stiffness fixing bracket 22, and prevent direct contact with high stiffness components, including the fixing bracket 22 and the structural member 18, thanks to the cushion 30. In comparison with previously known knee bolsters, the knee bolsters 20 allow for a reduction in the risk of injuries such as ligament tear or fractures during a frontal accident of the vehicle 10.

In addition, thanks to the cushion 30, the pressure exerted by the front panel 16A is more evenly transmitted to the fixing bracket 22 during a frontal accident, thus reducing the risks of front panel 16A breakage.

Preferably, a length L30 of the cushion 30 is comprised between 150 mm and 200 mm, for example equal to 180 mm. Preferably, a width W30 of the cushion 30 is comprised between 20 mm and 40 mm, for example equal to 30 mm. Hence, the size of the cushion 30 is sufficient to protect the legs of the passenger P in case of a frontal accident independently of the height of the passenger. In addition, the length of the cushion 30 ensures that both the knee and the tibia of the passenger P are in contact with the cushion during a frontal accident, avoiding relative motion between the knee and the tibia susceptible to cause ligament tear or other serious injuries. In particular, a length L30 of 150 mm is sufficient to support both knee and tibia of the passenger P, for a height of the passenger P going from a 5^{th} percentile female to a 95^{th} percentile male.

In the disclosure, only two knee bolsters 20, facing the driver's seat 12, are described. It is to be understood that the vehicle 10 can also be equipped with two other knee bolsters facing the passenger's seat, to protect the legs of a passenger P sitting on the passenger's seat, or only with two knee bolsters facing the passenger's seat instead of facing the driver's seat.

Example 1: a vehicle 10, comprising:
- an instrument panel 16, defining an internal volume V16,
- a structural member 18, located in the internal volume V16 of the instrument panel 16 and on which the instrument panel is fixed, and
- at least one knee bolster 20, located in the internal volume V16 of the instrument panel 16 and comprising:
   ∘ a L-shaped fixing bracket 22, having a fixation leg 24 fixed to the structural member 18 and a support leg 26 extending from the fixation leg 24 towards the instrument panel 16, and
   ∘ a cushion 30, attached to the support leg 26 of the fixing bracket 22 and located between the fixing bracket and the instrument panel 16.

Example 2: the vehicle 10 of example 1, wherein the support leg 26 extends from the fixation leg 24 obliquely upwards.

Example 3: the vehicle 10 of example 2, wherein the support leg 26 extends from the fixation leg 24 at an angle α to a vertical axis Z comprised between 30° and 55°.

Example 4: the vehicle 10 of any one of examples 1-3, wherein the cushion 30 is made of a shock absorbing foam.

Example 5: the vehicle 10 of example 4, wherein the cushion 30 is made of expanded polypropylene having a density comprised between 0.015 g/cm³ and 0.055 g/cm³.

Example 6: the vehicle 10 of any one of examples 1-5, further comprising a seat 12 having a squab 12A and a backrest 12B, wherein the at least one knee bolster 20 is located, along a vertical axis Z of the vehicle 10, at least partially above the squab 12A.

Example 7: the vehicle 10 of example 6, wherein the instrument panel 16 comprises a front panel 16A facing the seat 12, the support leg 26 extending from the fixation leg 24 towards the front panel 16A and the cushion 30 being located between the fixing bracket 22 and the front panel 16A.

Example 8: the vehicle 10 of any one of examples 1-7, wherein the fixing bracket 22 is configured to deform plastically at a junction 28 between the fixation leg 24 and the support leg 26 under the effect of a force applied to the support leg 26.

Example 9: the vehicle 10 of example 8, wherein, in a plastically deformed configuration of the fixing bracket 22, the support leg 26 is in abutment against the structural member 18.

Example 10: the vehicle 10 of any one of examples 8-9, wherein, in a plastically deformed configuration of the fixing bracket 22, an angle β' between the fixation leg 24 and the support leg 26 is comprised between 74° and 80°.

Example 11: the vehicle 10 of any one of examples 1-10, wherein, in a non-deformed configuration of the fixing bracket 22, an angle β between the fixation leg 24 and the support leg 26 is comprised between 90° and 110°.

Example 12: the vehicle 10 of any one of examples 1-11, wherein the fixing bracket 22 is configured to limit a deformation of the instrument panel 16 under the effect of a force applied to the instrument panel 16 oriented towards the fixing bracket 22.

Example 13: the vehicle 10 of any one of examples 1-12, wherein the fixing bracket 22 is made of steel.

Example 14: the vehicle 10 of any one of examples 1-13, wherein a length L30 of the cushion 30 is comprised between 150 mm and 200 mm.

Example 15: the vehicle 10 of any one of examples 1-14, comprising two knee bolsters 20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle (10), comprising:
- an instrument panel (16), defining an internal volume (V16),
- a structural member (18), located in the internal volume (V16) of the instrument panel (16) and on which the instrument panel is fixed, and
- at least one knee bolster (20), located in the internal volume (V16) of the instrument panel (16) and comprising:
∘ a L-shaped fixing bracket (22), having a fixation leg (24) fixed to the structural member (18) and a support leg (26) extending from the fixation leg (24) towards the instrument panel (16), and
∘ a cushion (30), attached to the support leg (26) of the fixing bracket (22) and located between the fixing bracket and the instrument panel (16).

2. The vehicle (10) of claim 1, wherein the support leg (26) extends from the fixation leg (24) obliquely upwards.

3. The vehicle (10) of claim 2, wherein the support leg (26) extends from the fixation leg (24) at an angle (α) to a vertical axis (Z) comprised between 30° and 55°.

4. The vehicle (10) of any one of claims 1-3, wherein the cushion (30) is made of a shock absorbing foam.

5. The vehicle (10) of claim 4, wherein the cushion (30) is made of expanded polypropylene having a density comprised between 0.015 g/cm³ and 0.055 g/cm³.

6. The vehicle (10) of any one of claims 1-5, further comprising a seat (12) having a squab (12A) and a backrest (12B), wherein the at least one knee bolster (20) is located, along a vertical axis (Z) of the vehicle (10), at least partially above the squab (12A).

7. The vehicle (10) of claim 6, wherein the instrument panel (16) comprises a front panel (16A) facing the seat (12), the support leg (26) extending from the fixation leg (24) towards the front panel (16A) and the cushion (30) being located between the fixing bracket (22) and the front panel (16A).

8. The vehicle (10) of any one of claims 1-7, wherein the fixing bracket (22) is configured to deform plastically at a junction (28) between the fixation leg (24) and the support leg (26) under the effect of a force applied to the support leg (26).

9. The vehicle (10) of claim 8, wherein, in a plastically deformed configuration of the fixing bracket (22), the support leg (26) is in abutment against the structural member (18).

10. The vehicle (10) of any one of claims 8-9, wherein, in a plastically deformed configuration of the fixing bracket (22), an angle (β') between the fixation leg (24) and the support leg (26) is comprised between 74° and 80°.

11. The vehicle (10) of any one of claims 1-10, wherein, in a non-deformed configuration of the fixing bracket (22), an angle (β) between the fixation leg (24) and the support leg (26) is comprised between 90° and 110°.

12. The vehicle (10) of any one of claims 1-11, wherein the fixing bracket (22) is configured to limit a deformation of the instrument panel (16) under the effect of a force applied to the instrument panel (16) oriented towards the fixing bracket (22).

13. The vehicle (10) of any one of claims 1-12, wherein the fixing bracket (22) is made of steel.

14. The vehicle (10) of any one of claims 1-13, wherein a length (L30) of the cushion (30) is comprised between 150 mm and 200 mm.

15. The vehicle (10) of any one of claims 1-14, comprising two knee bolsters (20).
